# EUROPEAN PATENT SPECIFICATION

(11) **EP 2 766 708 B1**
(45) Date of publication and mention of the grant of the patent: **02.08.2017**
(21) Application number: 12784033.8
(22) Date of filing: 09.10.2012
(51) Int. Cl.: G01N 1/10, F01M 11/10

(54) **AN ARRANGEMENT FOR AND A METHOD OF TAKING A SAMPLE OF LUBRICATION OIL IN AN INTERNAL COMBUSTION PISTON ENGINE**
VERFAHREN UN VORRICHTUNG ZUR ÖLSAMPLING IN EINER BRENNKRAFTMASCHINE
DISPOSITIF ET PROCÉDÉ POUR PRENDRE DES CAMPIONS D'HUILE DANS UN MOTEUR À COMBUSTION INTERNE

(30) Priority: 14.10.2011 FI 20116019
(43) Date of publication of application: 20.08.2014
(73) Proprietor: Wärtsilä Finland Oy, 65380 Vaasa (FI)
(72) Inventor: RIIKI, Tomi, FI-65370 Vaasa (FI)
(74) Representative: Genip Oy
(86) International application number: PCT/FI2012/050968
(87) International publication number: WO 2013/053995

(56) References cited:
- JP-A- H05 164 661
- JP-B- 8 014 097
- JP-B2- 4 328 443
- JP-B2- H0 665 843
- KR-A- 20040 076 294

## Description

### Technical field

Invention relates to a method of taking a sample of lubrication oil in an internal combustion piston engine from its cylinder's inner surface, comprising the steps of operating the engine and continuously registering a position information representing the angular position of the crank shaft, providing one or more set values of angular position for triggering the initiation of a sequence of taking a sample, comparing each position information to each one of the one or more set values, in case the difference between the position information and the set value is smaller than a predetermined difference value the sequence of taking a sample is initiated, and the sequence of taking a sample comprising opening a sample port which opens a passage to the cylinder inner surface, admitting an amount of oil to flow through the port into the passage and closing the port.

Invention relates also to an arrangement for taking a sample of lubrication oil in an internal combustion piston engine from its cylinder's inner surface, in which arrangement a sampling device comprising a body into which there is arranged a space, which is provided with a sample port at its first end, a needle part arranged into the space to co-operate with the sample port and an actuator coupled to the needle part for positioning the needle to selectively open and close the sample port.

### Background art

Lubrication of an internal combustion piston engine is typically arranged be feeding lubrication medium, typically oil, to parts of the engine requiring lubrication by pressurizing the lubrication oil and leading pressurized oil to the desired locations by means of lubrication channels arranged to the engine. While the engine is operated to quality of the oil decreases due to e.g. contaminants originating from combustion process and also wearing of the components of the engine. Usually a closed circulation loop is used in which the same amount of lubrication oil is gathered to an oil sump of the engine after participating in lubrication and pumped again to the desired lubrication locations after proper treatment like filtering. Before the lubrication and possibly other properties of the oil are deteriorated too much the oil is changed.

The quality of lubrication oil has great impact on the service life and required maintenance intervals of the engine. Therefore it has been suggested to monitor the oil during the running of the engine.

For example in JP8014097 there is shown a system in which a cylinder liner and a piston ring are lubricated by a cylinder oil injection system and in which an oil sampling means to sample cylinder oil for the slide surface of the cylinder liner during operation of an engine is provided.

JP4328443 discloses device by means a sample of oil may be obtained, by means of which the clogging of an oil picking hole may be prevented.

JP 665843 discloses an orifice provided in the upper peripheral wall of a cylinder liner which is connected to a nozzle of an electromagnetic valve for taking out cylinder oil through a piping. The electromagnetic valve is set to be opened by a crank detecting device and a synchronizing device in a period of crank angle being in some degrees after the upper dead point. Upon the opening of the electromagnetic valve the cylinder oil supplied from an oiling rod is taken into a collecting bottle through a collecting pipe, and oil amounts supplied from oil tanks is adjusted by the operation of change-over valves from the analysis result of taken-out oil.

KR 2004 0076294 discloses a cylinder oil picking apparatus of the low speed two-stroke crosshead engine which is about the cylinder oil picking apparatus of the low speed two-stroke crosshead engine and which easily collects the oil of the low speed two-stroke crosshead engine on a real time basis and in which the purpose confirms the supply state of the cylinder oil and facilitating the sampling which is to tell about the evaluation of being actual of the lubricating oil coated the cylinder wall.

Further in JP 5164661 there is shown a method for sampling oil which is adhering onto a surface of a cylinder liner during operation of a large diesel engine by preventing blocking of an oil-sampling hole and a piping for sampling oil which are provided on a cylinder liner wall of an engine. In a method for sampling an oil which is adhered onto a surface of a cylinder liner via an oil-sampling hole which is provided on a cylinder liner wall of an engine a solenoid valve is arranged to operate in synchronization with revolution of an engine, and oil and other liquids are poured into the oil-sampling hole and the piping for sampling oil, thus preventing blocking of the oil-sampling hole and the piping for sampling oil.

Thus, it is known from the prior art to provide an arrangement for taking a sample of lubrication oil in an internal combustion engine from its cylinder's inner surface, in which arrangement a sampling device comprising a body into which there is arranged a space, which is provided with a sample port at its first end, a needle part arranged into the space to co-operate with the sample port, an actuator coupled to the needle part for positioning the needle to selectively open and close the sample port, where a needle part is arranged into a first body part of the sampling device and the actuator is arranged into a second body part, which needle part and actuator are arranged one after the other in common central axis in force transmission communication with each other.

Due to even more stringent demands of efficiency and operational reliability there has been emerged a need to improve the possibilities of tracking the operation of lubrication system and quality of lubrication oil on-line i.e. during the operation of the engine.

It is an object of the invention to provide a method of taking a sample of lubrication oil in an internal combustion engine from its cylinder's inner surface by means of which it is possible to take more precise sample.

It is further an object of the invention to provide an arrangement for taking a sample of lubrication oil in an internal combustion engine from its cylinder's inner surface by means of which it is possible to take more precise sample.

### Disclosure of the Invention

The objects of the invention can be met substantially as is disclosed in the independent claim and in the other claims describing more details of different embodiments of the invention.

According to an embodiment of the invention a method of taking a sample of lubrication oil in an internal combustion engine from its cylinder's inner surface comprising the steps of operating the engine and continuously registering a position information representing the angular position of the crank shaft, providing one or more set values of angular position for triggering the initiation of a sequence of taking a sample comparing each position information to each one of the one or more set values, in case the difference between the position information and the set value is smaller than a predetermined difference value the sequence of taking a sample is initiated, the sequence of taking a sample comprising opening a sample port which opens a passage to the cylinder inner surface, admitting an amount of oil to flow through the port into the passage and closing the port. It is characteristic to the invention that the set value of angular position is determined so that the sequence of taking a sample is synchronized to take place prior to a piston ring in a moving piston sweeps over the port.

According to an advantageous embodiment of the invention the sequence of taking a sample comprising moving the needle part by actuating the piezo actuator and opening a sample port which opens a passage to the cylinder inner surface, admitting an amount of oil to flow through the port into the passage and closing the port.

According to an embodiment of the invention the time interval between commencing the opening of a sample port and the port being closed is 1 - 10 ms.

According to another embodiment of the invention the sequence of taking a sample is synchronized to take place between two successive piston rings of a moving piston.

According to another embodiment of the invention the sequence of taking a sample is synchronized to take place between the two upper piston rings of a moving piston.

According to another embodiment of the invention the sample is taken at more than one location at the same longitudinal position of the cylinder.

According to another embodiment of the invention the sample is taken at more than one location at one or more longitudinal position of the cylinder.

According to another embodiment of the invention the sample is taken when the piston is coming towards its top dead centre and the lower edge of upper compression ring has passed the upper point of sample port, and the sample port is maintained open until the piston is subsequently moving away from its top dead centre and the lower edge of upper compression ring is coming on the upper point of sample port.

According to an embodiment of the invention in an arrangement for taking a sample of lubrication oil in an internal combustion engine from its cylinder's inner surface a sampling device comprising a body into which there is arranged a space, which is provided with a sample port at its first end, a needle part arranged into the space to cooperate with the sample port, an actuator coupled to the needle part for positioning the needle to selectively open and close the sample port. It is characteristic to the invention that a needle part is arranged into a first body part of the sampling device and the actuator is arranged into a second body part, which needle part and actuator are arranged one after the other in common central axis in force transmission communication with each other, and that the body part comprises a sample channel extending from the sample port to the second body part, and that the actuator is a piezo actuator.

According to an embodiment of the invention the arrangement further comprises means for registering position information representing the angular position of the crank shaft and a control system to which the position information is made available, which control system is arranged to control the actuator based on the position information.

### Brief Description of Drawings

In the following, the invention will be described with reference to the accompanying exemplary, schematic drawings, in which
- Figure 1 illustrates a cylinder in an internal combustion piston engine according to an embodiment of the invention,
- Figure 2 illustrates a sampling device according to an embodiment, and
- Figure 3 illustrates an upper view cylinder in an internal combustion piston engine according to another embodiment of the invention.

### Detailed Description of Drawings

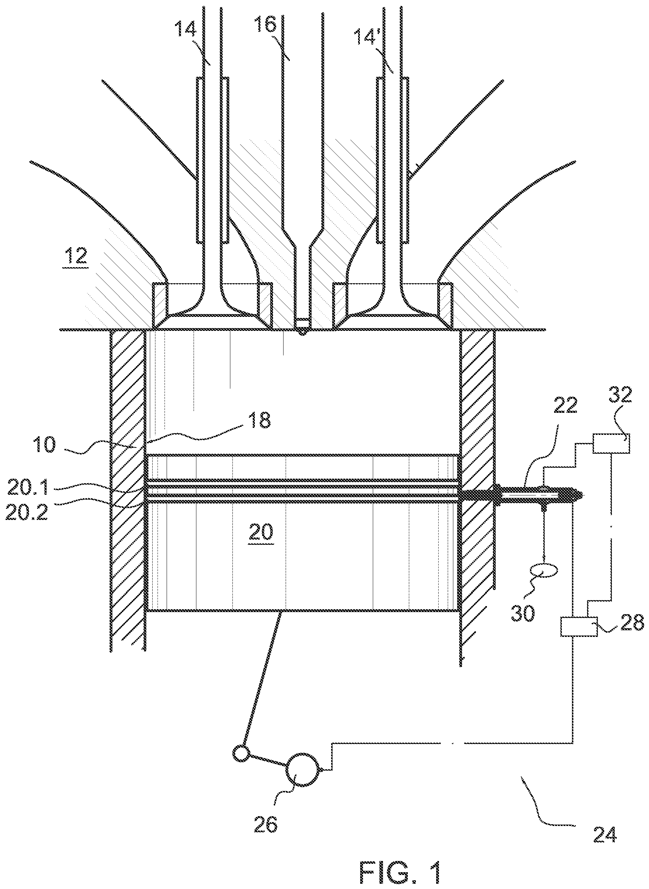

Figure 1 depicts schematically a cylinder 10 in an internal combustion piston engine and an arrangement for taking a sample of lubrication oil from the cylinder's inner surface. There is a cylinder head 12 arranged in connection with the cylinder 10. The cylinder head may comprise parts or elements known as such, like gas exchange valves i.e. inlet 14 and exhaust valves 14' and a fuel injector 16. There is also a piston 20 arranged to reciprocate between its top dead center and bottom dead center. The piston is coupled to a crank shaft 26 of the engine. Piston is provided with at least two successive piston rings 20.1, 20.2, the two upper ones at the end of the piston top of which are so called compression rings.

Cylinder's inner surface 18 acts as guiding surface for the piston 20. Therefore it is lubricated by a lubrication system (not shown here) of the engine so that oil film is created on the surface i.e. between the cylinder and the piston. There is a sampling device 22 arranged to the cylinder 10 of the engine for taking a sample of lubrication oil on the cylinder inner surface.

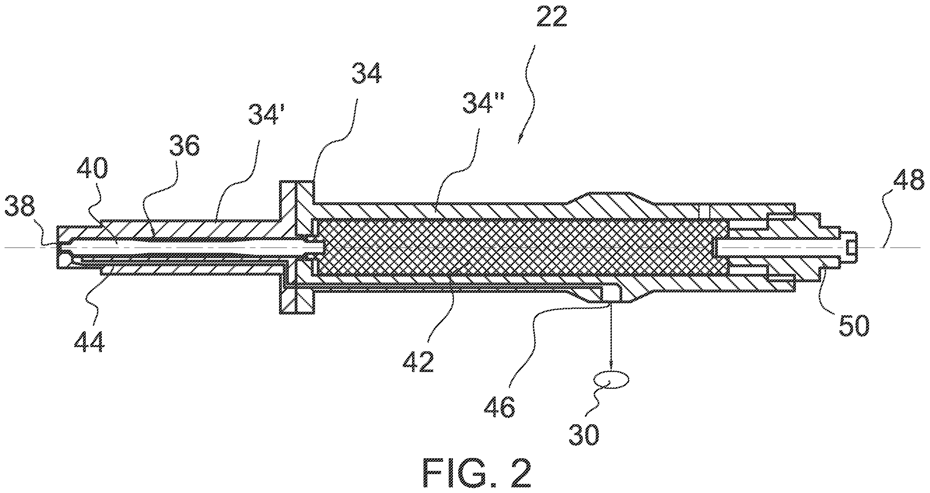

An embodiment of the sampling device 22 is shown in more detailed manner in figure 2. The sampling device 22 comprises a body 34, which is formed of two body parts 34', 34". There is a space 36 arranged into the first body part 34' into which a needle part 40 is arranged. The first body part is a section of the body in which the needle part is arranged. The first body part 34' is also provided with a sample port 38 at its first end and the needle part 40 is arranged into the space to co-operate with the sample port 38 so that the sample port is opened or closed based on the position of the needle part 40.The second body part 34" comprises an actuator 42 coupled to the needle part for positioning the needle to selectively open and close the sample port. The second body part is a section of the body in which the actuator is arranged. Thus the needle part and actuator are arranged one after the other in common central axis 48 in force transmission communication with each other.

Additionally the body, more specifically the first body part 34' comprises a sample channel 44 through which the taken sample is conducted to a sample processing system 30. In the sampling device the sample channel is extends from the sample port 38 to the second body part 34" into which a sample channel outlet 46 is arranged.

Advantageously at least the first body part 34' has cylindrical outer surface to facilitate installation into a bore arranged to a cylinder of the engine.

The sampling device is provided with a force sensing means, such as a probe system 50, which registers the status of the piezo actuator by sensing the force exerted by the actuator to the needle part. The probe system is also connected to the control system 28 so that the operation of the actuator and thus the sampling device may be verified.

In the arrangement for taking a sample of lubrication oil from the cylinder's inner surface the sampling device 22 is arranged to extend through the cylinder sleeve in gas tight manner so that its sample port opens into the space in the cylinder at the surface of the cylinder. The sampling device is arranged to the cylinder at a distance from the end being in proximity to the cylinder head thereof. According to an embodiment the sampling device is arranged to that longest possible sampling time between two compression rings 20.1, 20.2 may be obtained. The sampling device 22 is located so that lowest point of sample port 38 is equal to upper edge of the lower compression ring when the piston is at the top dead centre. This embodiment is operated so that the sample port 38 is opened when the piston is coming towards its top dead centre and the lower edge of upper compression ring 20.1 has passed the upper point of sample port. The sample port is maintained open until the piston is subsequently moving away from its top dead centre and the lower edge of upper compression ring is coming on the upper point of sample port. The term "upper" refers to the cylinder head side of the piston.

According to another embodiment the distance is at a location which the lowermost piston ring passes when the piston moves to its top dead center.

As can be seen in the figure 1 the sampling device 22 is positioned circumferentially in the cylinder at the location of the exhaust valve 14'. That is practically the hottest location in the engine and the circumstances of the lubrication oil are the harshest ones.

The arrangement comprises further a means 24 for registering position information representing the angular position of the crank shaft 26. The position information may be obtained directly from the crank shaft of indirectly from another component coupled to the crank shaft, such as a fly wheel or a cam shaft. The angular position of the crank shaft 26 defines also the position of the piston in the cylinder and the stage of the cycle practiced in the combustion chamber. Thus it is possible to actuate the sampling device to open - and take a sample - at a selected position or positions of the piston, based on the angular position of the crank shaft 26. There is also a control system 28 provided to which the position information is made available, and which control system is arranged to control the operation of the sampling device 22 based on the position information. The sampling device 22 is provided a dedicated power unit 32 which physically operates the sampling device. The power unit 32 is also in connection with the control system 28. Preferably the actuator 32 in the sampling device 22 is a piezo actuator. This provides fast acting operation of the needle part 40 and thus makes it possible to maintain the sample port 38 open for only short periods of time. This in turn makes it possible to take a sample at a desired stage of the engine's operational stage.

According to an advantageous embodiment the arrangement is operated so that while the engine is running the position information is registered in substantially continuous manner to or by the control system 28. One or more set values of an angular position i.e. the position information for triggering an initiation of a sequence of taking a sample is/are stored in or made available to the control system 28 and each registered position information is compared to each of the one or more set values. Now, a comparison is performed so that in case there is a difference between the position information and the set value, which difference is smaller than a predetermined difference value a sequence of taking a sample is initiated, otherwise a new comparison is performed based on a next position information.

The sequence of taking a sample in turn comprises opening a sample port in the sampling device 22. Since the sample port opens a passage to the cylinder inner surface, admitting an amount of oil to flow through the port into the passage may be realized controllably. Subsequently to that the sample port is closed. According to an embodiment of the invention the set value of angular position is determined so that the sequence of taking a sample is synchronized to take place substantially immediately prior to a piston ring in a moving piston sweeps over the sample port. The time interval between commencing the opening of a sample port and the port being closed advantageously is 1 - 10 ms.

According to another embodiment of the invention the sequence of taking a sample in turn comprises opening a sample port in the sampling device 22 by moving the needle part. This is accomplished by actuating the piezo actuator. Since the sample port opens a passage to the cylinder inner surface, admitting an amount of oil to flow through the port into the passage may be realized controllably. Subsequently to that the sample port is closed. According to an embodiment of the invention the set value of angular position is determined so that the sequence of taking a sample is synchronized to take place substantially immediately prior to a piston ring in a moving piston sweeps over the sample port. The time interval between commencing the opening of a sample port and the port being closed advantageously is 1 - 10 ms. Such a short opening period is made possible by the piezo actuator.

The samples are led to a sample processing system 30 which is in connection with the sampling device 22.

According to an embodiment of the invention the sequence of taking a sample is synchronized to take place during the exhaust cycle. With four stroke engines that is preferably 180 - 240° crank angle (CA), whereas 0° CA is TDC at combustion cycle. Thus the state of oil degraded by combustion may be monitored.

According to an embodiment of the invention the sequence of taking a sample is synchronized to take place at the end of exhaust cycle. With four stroke engines that is preferably 220 - 240° crank angle (CA), whereas 0° CA is TDC at combustion cycle.

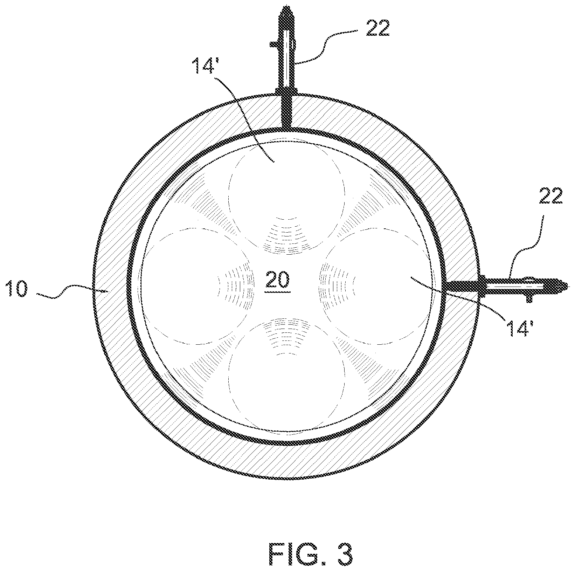

In figure 3 there is shown an embodiment of the invention where there are two exhaust valves14' and two inlet valves 14. There is a sampling device 22 arranged circumferentially next to each exhaust valve 14'.

Needle diameter may be selected as a balance between sampling time and sampling volume. With smaller sample port 38 (or bigger distance between compression rings) it is possible to have longer sampling time between compression rings. With bigger sample port sampling volume is greater, but sampling time decreases. Force needed to withstand cylinder pressure during combustion also increases with bigger sample port 38.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. Arrangement for taking a sample of lubrication oil in an internal combustion engine from its cylinder's inner surface, in which arrangement a sampling device comprising :
- a body (34) into which there is arranged a space (36), which is provided with a sample port (38) at its first end,
- a needle part (40) arranged into the space to co-operate with the sample port,
- an actuator coupled to the needle part (40) for positioning the needle to selectively open and close the sample port,
- a needle part (40) is arranged into a first body part (34') of the sampling device (22) and the actuator (42) is arranged into a second body part (34"), which needle part (40) and actuator are arranged one after the other in common central axis in force transmission communication with each other, **characterized in that**
- the body part comprises a sample channel extending from the sample port to the second body part, and
- the actuator is a piezo actuator,
- and the arrangement is provided with a force sensing means (50), which registers the status of the piezo actuator by sensing the force exerted by the actuator to the needle part (40).

2. Arrangement for taking a sample of lubrication oil in an internal combustion according to claim 1, **characterized in that** the sampling device (22) is located so that lowest point of sample port (38) is equal to upper edge of the lower compression ring when the piston is at the top dead centre.

3. Arrangement for taking a sample of lubrication oil in an internal combustion according to claim 1, **characterized in that** the sampling device (22) is arranged to the cylinder at a location which the lowermost piston ring passes when the piston moves to its top dead center.

4. Arrangement for taking a sample of lubrication oil in an internal combustion according to claim 1, **characterized in that** arrangement further comprises
- means for registering position information representing the angular position of the crank shaft, and
- a control system to which the position information is made available, which control system is arranged to control the actuator based on the position information.

5. Arrangement for taking a sample of lubrication oil in an internal combustion according to claim 1, **characterized in that** the first body part (34') has cylindrical outer surface.

6. Method of taking a sample of lubrication oil in a four stroke internal combustion engine from its cylinder's inner surface by making use of an arrangement comprising - a body (34) into which there is arranged a space (36), which is provided with a sample port (38) at its first end,
- a needle part (40) arranged into the space to co-operate with the sample port,
- a piezo actuator (32) coupled to the needle part (40) for positioning the needle to selectively open and close the sample port,
the method comprising the steps of
- operating the engine and continuously registering a position information representing the angular position of the crank shaft,
- providing one or more set values of angular position for triggering the initiation of a sequence of taking a sample,
- comparing each position information to each one of the one or more set values,
- in case the difference between the position information and the set value is smaller than a predetermined difference value the sequence of taking a sample is initiated, and the sequence of taking a sample comprising moving the needle part (40) by actuating the piezo actuator (32) and opening the sample port which opens a passage to the cylinder inner surface, and admitting an amount of oil to flow through the port into the passage and closing the port,
**characterized in that** the status of the piezo actuator is registered by sensing the force exerted by the actuator to the needle part (40).

7. Method according to claim 6, **characterized in that** the set value of angular position is determined so that a sequence of taking a sample is synchronized to take place at 180 - 240° crank angle (CA), whereas 0° CA is TDC at combustion cycle.

8. Method according to claim 6, **characterized in that** the time interval between commencing the opening of a sample port and the port being closed is 1 - 10 ms.

9. Method according to claim 6, **characterized in that** the sequence of taking a sample is synchronized to take place between two successive piston rings of a moving piston.

10. Method according to claim 6, **characterized in that** the sequence of taking a sample is synchronized to take place between the two upper piston rings of a moving piston.

11. Method according to anyone of the preceding claims 6-10, **characterized in that** the sample is taken at more than one location at the same longitudinal position of the cylinder.

12. Method according to anyone of the preceding claims 6-10, **characterized in that** the sample is taken at more than one location at one or more longitudinal position of the cylinder.

13. Method according to claims 6, **characterized in that** the sample port (38) is opened when the piston is coming towards its top dead centre and the lower edge of upper compression ring (20.1) has passed the upper point of sample port, and that the sample port is maintained open until the piston is subsequently moving away from its top dead centre and the lower edge of upper compression ring is coming on the upper point of sample port.

## Patentansprüche

1. Anordnung zum Nehmen einer Probe von Schmieröl in einem Verbrennungsmotor von der inneren Oberfläche seines Zylinders, wobei in der Anordnung ein Probenehmer Folgendes umfasst:
- ein Hauptteil (34), in dem ein Raum (36) angeordnet ist, der an seinem ersten Ende mit einer Probenentnahmeöffnung (38) versehen ist,
- ein Nadelteil (40), das in dem Raum angeordnet ist, um mit der Probenentnahmeöffnung zusammenzuwirken,
- einen Aktuator, der mit dem Nadelteil (40) gekoppelt ist, um die Nadel zu positionieren, um die Probenentnahmeöffnung selektiv zu öffnen und zu schließen,
- wobei ein Nadelteil (40) in einem ersten Hauptteil (34') des Probenehmers (22) angeordnet ist und der Aktuator (42) in einem zweiten Hauptteil (34") angeordnet ist, wobei das Nadelteil (40) und der Aktuator auf einer gemeinsamen mittleren Achse in Kraftübertragungskommunikation miteinander hintereinander angeordnet sind, **dadurch gekennzeichnet, dass**
- das Hauptteil einen Probenentnahmekanal umfasst, der sich von der Probenentnahmeöffnung bis zu dem zweiten Hauptteil erstreckt, und
- der Aktuator ein Piezoaktuator ist,
- und die Anordnung mit einem Kraftaufnahmemittel (50) versehen ist, das den Status des Piezoaktuators registriert, indem es die Kraft aufnimmt, die durch den Aktuator auf das Nadelteil (40) ausgeübt wird.

2. Anordnung zum Nehmen einer Probe von Schmieröl in einem Verbrennungsmotor nach Anspruch 1, **dadurch gekennzeichnet, dass** der Probenehmer (22) derart lokalisiert ist, dass der unterste Punkt der Probenentnahmeöffnung (38) gleich dem oberen Rand des unteren Verdichtungsrings ist, wenn sich der Kolben im oberen Totpunkt befindet.

3. Anordnung zum Nehmen einer Probe von Schmieröl in einem Verbrennungsmotor nach Anspruch 1, **dadurch gekennzeichnet, dass** der Probenehmer (22) für den Zylinder an einer Stelle angeordnet ist, an welcher der unterste Kolbenring vorbeigeht, wenn sich der Kolben zu seinem oberen Totpunkt bewegt.

4. Anordnung zum Nehmen einer Probe von Schmieröl in einem Verbrennungsmotor nach Anspruch 1, **dadurch gekennzeichnet, dass** die Anordnung ferner Folgendes umfasst:
- Mittel zum Registrieren von Positionsinformationen, welche die Winkelposition der Kurbelwelle darstellen, und
- ein Steuersystem, dem Positionsinformationen bereitgestellt werden, wobei das Steuersystem angeordnet ist, um den Aktuator basierend auf den Positionsinformationen zu steuern.

5. Anordnung zum Nehmen einer Probe von Schmieröl in einem Verbrennungsmotor nach Anspruch 1, **dadurch gekennzeichnet, dass** das erste Hauptteil (34') eine zylindrische äußere Oberfläche aufweist.

6. Verfahren zum Nehmen einer Probe von Schmieröl in einem Vier-Takt-Verbrennungsmotor von der inneren Oberfläche seines Zylinders unter Verwendung einer Anordnung, die Folgendes umfasst:
- ein Hauptteil (34), in dem ein Raum (36) angeordnet ist, der an seinem ersten Ende mit einer Probenentnahmeöffnung (38) versehen ist,
- ein Nadelteil (40), das in dem Raum angeordnet ist, um mit der Probenentnahmeöffnung zusammenzuwirken,
- einen Piezo-Aktuator (32), der mit dem Nadelteil (40) gekoppelt ist, um die Nadel zu positionieren, um die Probenentnahmeöffnung selektiv zu öffnen und zu schließen,
wobei das Verfahren folgende Schritte umfasst:
- Betätigen des Motors und kontinuierliches Registrieren einer Positionsinformation, welche die Winkelposition der Kurbelwelle darstellt,
- Bereitstellen eines oder mehrerer Sollwerte einer Winkelposition zum Auslösen des Einleitens einer Sequenz des Probenehmens,
- Vergleichen jeder Positionsinformation mit jedem von dem einen oder den mehreren Sollwerten,
- wobei, falls der Unterschied zwischen der Positionsinformation und dem Sollwert kleiner als ein vorbestimmter Differenzwert ist, die Sequenz des Probenehmens eingeleitet wird, und die Sequenz des Probenehmens das Bewegen des Nadelteils (40) durch Betätigen des Piezoaktuators (32) und das Öffnen der Probenentnahmeöffnung, die einen Durchgang zu der zylindrischen inneren Oberfläche öffnet, und das Einlassen einer Ölmenge, damit sie durch die Öffnung in den Durchgang fließt, und das Schließen der Öffnung umfasst,
**dadurch gekennzeichnet, dass** der Status des Piezoaktuators registriert wird, indem die Kraft aufgenommen wird, die durch den Aktuator auf das Nadelteil (40) ausgeübt wird.

7. Verfahren nach Anspruch 6, **dadurch gekennzeichnet, dass** der Sollwert der Winkelposition derart bestimmt wird, dass eine Sequenz des Probenehmens synchronisiert ist, um bei einem Kurbelwinkel (CA) von 180° bis 240° stattzufinden, wohingegen 0° CA der TDC im Verbrennungszyklus ist.

8. Verfahren nach Anspruch 6, **dadurch gekennzeichnet, dass** das Zeitintervall zwischen dem Beginn des Öffnens einer Probenentnahmeöffnung und dem Schließen der Öffnung 1 bis 10 ms beträgt.

9. Verfahren nach Anspruch 6, **dadurch gekennzeichnet, dass** die Sequenz des Probenehmens synchronisiert ist, um zwischen zwei aufeinanderfolgenden Kolbenringen eines sich bewegenden Kolbens stattzufinden.

10. Verfahren nach Anspruch 6, **dadurch gekennzeichnet, dass** die Sequenz des Probenehmens synchronisiert ist, um zwischen den beiden oberen Kolbenringen eines sich bewegenden Kolbens stattzufinden.

11. Verfahren nach einem der vorhergehenden Ansprüche 6 bis 10, **dadurch gekennzeichnet, dass** die Probe an mehr als einer Stelle in der gleichen Längsposition des Zylinders genommen wird.

12. Verfahren nach einem der vorhergehenden Ansprüche 6 bis 10, **dadurch gekennzeichnet, dass** die Probe an mehr als einer Stelle in einer oder mehreren Längspositionen des Zylinders genommen wird.

13. Verfahren nach Anspruchs 6, **dadurch gekennzeichnet, dass** die Probenentnahmeöffnung (38) geöffnet ist, wenn sich der Kolben seinem oberen Totpunkt nähert, und der untere Rand des oberen Verdichtungsrings (20.1) an dem oberen Punkt der Probenentnahmeöffnung vorbeigegangen ist, und dass die Probenentnahmeöffnung offen gehalten wird, bis sich der Kolben anschließend von seinem oberen Totpunkt entfernt und der untere Rand des oberen Verdichtungsrings an dem oberen Punkt der Probenentnahmeöffnung ankommt.

## Revendications

1. Système pour le prélèvement d'un échantillon d'huile lubrifiante dans un moteur à combustion interne à partir de la surface intérieure de son cylindre, le système présentant un dispositif d'échantillonnage comprenant :
- un corps (34) dans lequel est prévu un espace (36), lequel est pourvu d'un orifice d'échantillonnage (38) à sa première extrémité,
- une partie d'aiguille (40) disposée dans l'espace pour coopérer avec l'orifice d'échantillonnage,
- un actionneur accouplé à la partie d'aiguille (40) pour le positionnement de l'aiguille afin d'ouvrir ou de fermer sélectivement l'orifice d'échantillonnage,
- une partie d'aiguille (40) est disposée dans une première partie de corps (34') du dispositif d'échantillonnage (22) et l'actionneur (42) est disposé dans une deuxième partie de corps (34"), ladite partie d'aiguille (40) et l'actionneur étant disposés l'un après l'autre sur un axe médian commun en communication par transmission de force l'un avec l'autre, **caractérisé en ce que**
- la partie de corps comprend un canal d'échantillonnage s'étendant de l'orifice d'échantillonnage à la deuxième partie de corps, et
- l'actionneur est un actionneur piézoélectrique,
- et le système est pourvu d'un moyen de détection de force (50) chargé d'enregistrer le statut de l'actionneur piézoélectrique en détectant la force exercée par l'actionneur sur la partie d'aiguille (40).

2. Système pour le prélèvement d'un échantillon d'huile lubrifiante dans un moteur à combustion interne selon la revendication 1, **caractérisé en ce que** le dispositif d'échantillonnage (22) est placé de manière à ce que la point le plus bas de l'orifice d'échantillonnage (38) se trouve au niveau du bord supérieur de l'anneau de compression inférieur lorsque le piston se trouve au point mort supérieur.

3. Système pour le prélèvement d'un échantillon d'huile lubrifiante dans un moteur à combustion interne selon la revendication 1, **caractérisé en ce que** le dispositif d'échantillonnage (22) est placé au cylindre à un endroit où passe l'anneau de piston le plus bas lorsque le piston se déplace vers son point mort supérieur.

4. Système pour le prélèvement d'un échantillon d'huile lubrifiante dans un moteur à combustion interne selon la revendication 1, **caractérisé en ce que** le système comprend en outre :
- un moyen pour l'enregistrement d'informations de position représentant la position angulaire du vilebrequin, et
- un système de commande auquel les informations de position sont mises à disposition, ledit système de commande étant conçu pour commander l'actionneur sur la base des informations de position.

5. Système pour le prélèvement d'un échantillon d'huile lubrifiante dans un moteur à combustion interne selon la revendication 1, **caractérisé en ce que** la première partie de corps (34') présente une surface extérieure cylindrique.

6. Procédé pour le prélèvement d'un échantillon d'huile lubrifiante dans un moteur à combustion interne, à partir de la surface intérieure de son cylindre, à l'aide d'un système comprenant :
- une partie de corps (34) dans lequel est prévu un espace (36), lequel est pourvu d'un orifice d'échantillonnage (38) à sa première extrémité,
- une partie d'aiguille (40) disposée dans l'espace pour coopérer avec l'orifice d'échantillonnage,
- un actionneur piézoélectrique (32) accouplé à la partie d'aiguille (40) pour le positionnement de l'aiguille afin d'ouvrir ou de fermer sélectivement l'orifice d'échantillonnage,
le procédé comprenant les étapes suivantes :
- l'actionnement du moteur et l'enregistrement continu d'une information de position représentant la position angulaire du vilebrequin,
- la mise à disposition d'une ou de plusieurs valeurs de réglage de la position angulaire pour déclencher le début d'une séquence de prélèvements d'échantillons,
- la comparaison de chaque information de position avec chacune des une ou plusieurs valeurs de réglage,
- dans le cas où l'écart entre l'information de position et la valeur de réglage est inférieure à une valeur d'écart prédéterminée, la séquence de prélèvements d'échantillons sera initiée, et la séquence de prélèvements d'échantillons comprenant le déplacement de la partie d'aiguille (40) en actionnant l'actionneur piézoélectrique (32) et l'ouverture de l'orifice d'échantillonnage ouvrant un passage vers la surface intérieure du cylindre, ainsi que l'écoulement d'une quantité d'huile à travers l'orifice et dans le passage et la fermeture de l'orifice,
**caractérisé en ce que** le statut de l'actionneur piézoélectrique est enregistrée en détectant la force exercée par l'actionneur sur la partie d'aiguille (40).

7. Procédé selon la revendication 6, **caractérisé en ce que** la valeur de réglage de la position angulaire est déterminée de manière à ce qu'une séquence de prélèvements d'échantillons soit synchronisée pour avoir lieu à un angle de vilebrequin (CA) de 180° à 240°, tandis qu'un CA de 0° est TDC dans le cycle de combustion.

8. Procédé selon la revendication 6, **caractérisé en ce que** l'intervalle de temps entre le début de l'ouverture d'un orifice d'échantillonnage et la fermeture de l'orifice varie entre 1 et 10 ms.

9. Procédé selon la revendication 6, **caractérisé en ce que** la séquence de prélèvements est synchronisée pour avoir lieu entre deux anneaux de piston successifs d'un piston en mouvement.

10. Procédé selon la revendication 6, **caractérisé en ce que** la séquence de prélèvements d'échantillons est synchronisée pour avoir lieu entre deux anneaux de pistons supérieurs d'un piston en mouvement.

11. Procédé selon l'une quelconque des revendications 6 à 10, **caractérisé en ce que** l'échantillon est prélevé à plus d'un seul endroit, sur la même position longitudinale du cylindre.

12. Procédé selon l'une quelconque des revendications précédentes 6 à 10, **caractérisé en ce que** l'échantillon est prélevé à plus d'un seul endroit sur une ou plusieurs positions longitudinales du cylindre.

13. Procédé selon la revendication 6, **caractérisé en ce que** l'orifice d'échantillonnage (38) est ouvert lorsque le piston s'approche de son point mort supérieur et que le bord inférieur de l'anneau de compression supérieur (20.1) a dépassé la point supérieur de l'orifice d'échantillonnage, et **en ce que** l'orifice d'échantillonnage est maintenu ouvert jusqu'à ce que le piston s'éloigne consécutivement de son point mort supérieur et que le bord inférieur de l'anneau de compression supérieur vienne sur le point supérieur de l'orifice d'échantillonnage.
